# EUROPEAN PATENT APPLICATION

(11) **EP 2 863 596 A1**
(43) Date of publication of application: **22.04.2015**
(21) Application number: 13807671.6
(22) Date of filing: 20.05.2013
(51) Int. Cl.: H04L 12/749, H04L 12/66

(54) **SBC FOR CLOUD ENVIRONMENT AND METHOD FOR OPERATING SBC**

(30) Priority: 18.06.2012 KR 20120065202
(71) Applicant: Nable Communications, Inc., Seongnam-si, Gyeonggi-do 463-400 (KR)
(72) Inventor: KIM, Ji Hyung, Seoul 138-747 (KR); CHO, Jae Han, Yongin-si Gyeonggi-do 448-758 (KR); KIM, Dae Young, Seoul 135-531 (KR)
(74) Representative: Verriest, Philippe
(86) International application number: PCT/KR2013/004396
(87) International publication number: WO 2013/191381

(57) **Abstract**

A resource monitoring method comprises the steps of: generating process information including a process identifier, process user, process name, CPU usage, and IO usage; determining at least one first process having the same process user and process name from among a plurality of processes currently being executed; generating first group process information including a group process identifier, total CPU usage, and total IO usage of the determined at least one first process; and monitoring resources of the computing device in units of the generated first group process information.

## Description

### [Technical Field]

The present invention relates to a SBC(Session Boarder Controller) technology supporting to provide a VoIP(Voice over Internet Protocol) service and more particularly to a SBC apparatus for a cloud environment and a method for operating a SBC performing a predetermined address translation for a packet being provided by a VoIP terminal to stably perform the VoIP service in a cloud environment where a NAT(Network Address Translation) is applied to the cloud environment.

### [Background Art]

IP(Internet Protocol) based various services are provided according to developments of a computing device and a network environment and such IP based various techniques rapidly replace the conventional technologies.

The VoIP (Voice over Internet Protocol) corresponds to the IP based technology and is an important technique quickly applying advantages such as cheap calls cost, integrated management function.

Because the VoIP technology provides the IP based service, the VoIP technology is generated for requirements of a security and an IP management. Therefore, various additional devices are provided to the VoIP technology according to the requirements. A SBC (Session Boarder Controller) corresponds to one of the various additional devices and may provide a security in a VoIP environment based on a packet filtering function and perform an IP address management.

However, the VoIP based technology has a limitation where the VoIP based technology may not be operated in another network environment. This is because the VoIP based technology is designed based on an environment directly connected with an internet.

Especially, in case where a communication is performed based on a private IP for an internal network or in a specific network such as a cloud network, a change for the IP address of a header part is performed. Therefore, the VoIP based technology has a limitation where an actual VoIP is not applied.

### [Technical Problem]

Example embodiments of the present invention propose a SBC apparatus for a cloud environment and a method for operating a SBC performing a predetermined address translation for a packet being provided by a VoIP terminal to stably perform a VoIP service in a cloud environment where a NAT (Network Address Translation) is applied to the cloud environment.

Example embodiments of the present invention propose a SBC apparatus for a cloud environment and a method for operating a SBC performing an IP matching by checking to an area corresponding to a body of the VoIP packet to stably provide a VoIP service in an internal network or a cloud network environment where a change of a header packet unpredictably occurs.

Example embodiments of the present invention propose a SBC apparatus for a cloud environment and a method for operating a SBC stably providing the VoIP service in an environment where a dynamic IP translation is requested for a generating, maintaining or updating an address value of the own private IP and public IP at SBC itself.

### [Technical Solution]

In some embodiments, a SBC operating method is performed on a SBC(Session Boarder Controller) apparatus passing a NAT (Network Address Translation) to be operated in a cloud network accessible to Internet. The SBS apparatus is connectable with a SSW(Soft Switch) through the Internet and perform a predetermined address translation for offering a VoIP(Voice over Internet Protocol). The SBC operating method includes (a) checking an own public IP address being separated by an association with an own private IP (Internet Protocol) address and the NAT being used in the cloud network and (b) analyzing a packet for a VoIP communication when the packet is received from a source VoIP terminal, applying and updating the own public IP address to address information associated with a channel, the address information associated with the channel forming a channel with a target VoIP terminal being included in the packet.

In one embodiment, the (a) step may include (a-1) checking an own private IP address internally being assigned in the cloud network when a SBC instance is generated, (a-2) requesting the public IP address accessible to itself from an outside of the cloud network to the NAT and (a-3) associating and storing the public IP address being provided from the NAT with the private IP address.

In one embodiment, the (b) step may include at least one of (b-1) forming a signaling channel associating a URI (Uniform Resource Identifier) address of the source VoIP terminal with the own public IP address to be registered in the SSW and (b-2) forming a media stream channel for generating a call between the source VoIP terminal and the target VoIP terminal.

In one embodiment, the packet may include at least one of source address information of a corresponding packet, destination address information, source URI information, destination URI information and the address information associated with the channel.

In one embodiment, the address information associated with the channel may correspond to address information being used for forming the signaling channel and the media stream channel and is represented by using the own public IP address.

In one embodiment, the step (b-1) may include changing and determining the destination address information being associated with own address to an address of SSW and for the packet for forming the signaling channel, applying the own public IP address to update the address information associated with the channel of the corresponding packet.

In one embodiment, the step (b-1) further may include applying the own private IP address to update the source address information of the packet.

In one embodiment, the packet may store a URI (Uniform Resource identifier) of the source VoIP terminal as the source URI information and the destination URI information of the packet.

In one embodiment, the step (b-2) may further include analyzing a response packet provided from the target VoIP terminal and applying and updating own public IP address to the address information associated with the channel of the response packet.

In one embodiment, the step (b-2) further may include applying and updating the own private IP address to the source address information being associated with the address of SSW.

In some embodiments, SBC apparatus passing NAT (Network Address Translation) is operated in a cloud network accessible to Internet. The SBC apparatus is connectable with the SSW (Soft Switch) through the Internet, may perform a predetermined address translation for offering VoIP (Voice over Internet Protocol). The SBC apparatus includes an IP address checking unit configured to check an own public IP (Internet Protocol) address being separated by being associated with an own private IP address and the NAT being used in the cloud network and a packet updating unit configured to analyze a packet for a VoIP communication when the packet is received from a source VoIP terminal and updates an own public IP address to address information associated with a channel, the address information associated with the channel forming a channel with a target VoIP terminal being included in the packet.

In one embodiment, the IP address checking unit may use the NAT to check to check own private IP address internally being assigned in the cloud network and the public IP address accessible to itself from the outside of the cloud network.

In one embodiment, the SBC apparatus may further include an IP address storing unit configured to match and store the private IP address checked by the IP address checking unit and the public IP address and the IP address checking unit may apply a change when the change for at least one of the private IP address and the public IP address is generated to provide the changed IP address to the IP address storing unit.

In one embodiment, the packet may include at least one of source address information, destination address information, source URI information, destination URI information and address information associated with the channel.

In one embodiment, the packet updating unit may analyze the packet to check whether it is a corresponding packet for forming the signaling channel, applies the own public IP address and when it is a corresponding packet for forming the signaling channel and updates the source address information of the packet and the address information associated with the channel to provide the updated source address information and address information to the SSW.

In one embodiment, the packet updating unit may decide a corresponding packet as a packet for forming the signaling channel when the source URI information of the packet and the destination URI information are same.

In one embodiment, the packet updating unit analyzes the packet to check whether it is a packet for forming a signaling channel generating a call between the source VoIP terminal and the target VoIP terminal and applies the own public IP address when it is a packet for forming the media stream channel generating the call between the source VoIP terminal and the target VoIP terminal to update the address information associated with the channel.

In one embodiment, the packet updating unit may update the address information associated with the channel of a corresponding response packet to update the own public IP address, when a response packet being corresponded to the packet is received from the target VoIP terminal.

In some embodiments, a storage medium records a program executing a SBC(Session Boarder Controller) operating method, the SBC operating method is performed on a SBC apparatus, the SBC apparatus passing NAT(Network Address Translation) is operated in a cloud network accessible to Internet and the SBC apparatus is connectable with the SSW(Soft Switch) through the Internet and performs a predetermined address translation for offering VoIP (Voice over Internet Protocol). The program includes (a) checking an own public IP address being separated by an association with an own private IP (Internet Protocol) address and the NAT being used in the cloud network and (b) analyzing a packet for a VoIP communication when the packet is received from a source VoIP terminal, applying and updating the own public IP address to address information associated with a channel, the address information associated with the channel forming a channel with a target VoIP terminal being included in the packet.

### [Technical Effects]

A SBC for cloud environment and method for operating SBC according to example embodiments of the present invention may perform a predetermined address translation for a packet being provided by a VoIP terminal to stably perform a VoIP service in a cloud environment where a NAT (Network Address Translation) is applied to the cloud environment.

A SBC for cloud environment and method for operating SBC according to example embodiments of the present invention may perform an IP matching by checking to an area corresponding to a body of the VoIP packet to stably provide a VoIP service in an internal network or a cloud network environment where a change of a header packet unpredictably occurs.

A SBC for cloud environment and method for operating SBC according to example embodiments of the present invention stably may provide the VoIP service in an environment where a dynamic IP translation is requested for a generating, maintaining or updating an address value of the own private IP and public IP at SBC itself.

### [Description of Drawings]

FIG. 1 is a reference diagram illustrating a protocol flow in a SIP (Session Initiation Protocol) environment.
FIG. 2 is a reference diagram illustrating an example for an INVITE message of FIG. 1.
FIG. 3 is a block diagram representing a VoIP terminal and a SSW (Soft Switch) in a general network environment where a SBC apparatus is unapplied.
FIG. 4 is a reference diagram showing a content of the packet in each step for illustrating an IP registration in an example of FIG. 3.
FIG. 5 is a reference diagram showing a content of the packet in each step for illustrating an INVITE process in an example of FIG. 3.
FIG. 6 is a block diagram representing a VoIP terminal, a SBC apparatus and a SSW (Soft Switch) in a general network environment where a SBC apparatus is applied.
FIG. 7 is a reference diagram showing a content of the packet in each step for illustrating the IP registration in an example of FIG. 6.
FIG. 8 is a reference diagram showing a content of the packet in each step for illustrating an INVITE process in an example of FIG. 6.
FIG. 9 is a block diagram representing a VoIP terminal, a SBC apparatus and a SSW (Soft Switch) in a cloud network environment where a SBC apparatus is applied in a cloud network.
FIG. 10 is a reference diagram showing a content of a packet in each step for illustrating an IP registration in an example of FIG. 9
FIG. 11 is a reference diagram showing a content of a packet in each step for illustrating an INVITE process in an example of FIG. 9
FIG. 12 is a block diagram illustrating a SBC apparatus according to an example embodiment of the present invention.
FIG. 13 is a flowchart illustrating a method for operating a SBC apparatus according to an example embodiment of the present invention.

### [Mode for Invention]

The embodiments and the configurations depicted in the drawings are illustrative purposes only and do not represent all technical scopes of the invention, so it should be understood that various equivalents and modifications may exist at the time of filing this application. Although a preferred embodiment of the disclosure has been described for illustrative purposes, those skilled in the art will appreciate that various modifications, additions and substitutions are possible, without departing from the scope and spirit of the invention as disclosed in the accompanying claims.

Terms and words used in the specification and the claims shall be interpreted as to be relevant to the technical scope of the invention based on the fact that the inventor may property define the concept of the terms to explain the invention in best ways.

The terms "first" and "second" can be used to refer to various components, but the components may not be limited to the above terms. The terms will be used to discriminate one component from the other component. For instance, the first component may be referred to the second component and vice versa without departing from the right of the disclosure.

When a component is referred to as being "connected to" or "linked to" another component, the component may be directly connected to or linked to another component or an intervening component may be present therebetween. In contrast, if a component is referred to as being "directly connected to" or "directly linked to" another component, an intervening component may not be present therebetween.

Singular forms "a", "an" and "the" in the present disclosure are intended to include the plural forms as well, unless the context clearly indicates otherwise. It will be further understood that terms such as "including" or "having," etc., are intended to indicate the existence of the features, numbers, operations, actions, components, parts, or combinations thereof disclosed in the specification, and are not intended to preclude the possibility that one or more other features, numbers, operations, actions, components, parts, or combinations thereof may exist or may be added.

Identification letters (e.g., a, b, c, etc.) in respective steps or operations are used for the sake of explanation and do not describe any particular order. The respective operations may be changed from a mentioned order unless specifically mentioned in context. Namely, respective steps may be performed in the same order as described, may be substantially simultaneously performed, or may be performed in reverse order.

The present invention may be implemented as machine-readable codes on a machine-readable medium. The machine-readable medium includes any type of recording device for storing machine-readable data. Examples of the machine-readable recording medium include a read-only memory (ROM), a random access memory (RAM), a compact disk-read only memory (CD-ROM), a magnetic tape, a floppy disk, and optical data storage. The medium may also be carrier waves (e.g., Internet transmission). The computer-readable recording medium may be distributed among networked machine systems which store and execute machine-readable codes in a de-centralized manner.

The terms used in the specification are for the purpose of explaining specific embodiments and have no intention to limit the disclosure. Unless the context indicates otherwise, the singular expression may include the plural expression. In the following description, the term "include" or "has" will be used to refer to the feature, the number, the step, the operation, the component, the part or the combination thereof without excluding the presence or addition of one or more features, the numbers, the steps, the operations, the components, the parts or the combinations thereof.

A VoIP (Voice over IP) represenets a telephone system using an internet network. There are various protocols for VoIP and typical protocols are MGCP, H.323, SIP (Session Initiation Protocol). A best preferred and technologically advanced protocol is a SIP, this invention assumes a SIP protocol and is described for a SCB apparatus and a SBC operating method. However, it is obvious that the scope of the present invention is not limited to the SIP protocol.

Signaling and media stream may be connected so that a call is illustrated by using the VoIP two channels. For example, the signaling channel may be connected by using the SIP, the media stream channel may be connected by using a RTP and a RTCP.

The SIP is a protocol performing the signaling of a VoIP. The SIP may perform a work such as generation, termination and change of a multimedia stream session between terminals on an internet. Because the SIP has a structure very similar with a HTTP (Hyper Text Transfer Protocol) being used in a Web, the SIP is easily scalable and very flexible. That is, because a function is increased when method is added and an option for the function is increased on the SIP when a header is added, the SIP is easily scalable. Also, because the signaling is formed based on a P2P, it is easy to change a flow on connecting the call to match a service environment, the VoIP is flexible. Also, because a UAC (User Agent Client) and a UAS (User Agent Server) is operated by a transaction corresponding to a Request-Response scheme and is human-friendly, a message reading and a debugging are easy in the SIP.

The SIP may offer various services by calling to use a generated media stream session or combining multiple sessions. A service such as an IVR or a voice mail corresponds to a typical example being performed by manipulating information of the generated media stream session. In addition, the SIP may use derived various RFC to offer a service such as a Presence or an instance messaging.

The SIP may use a SDP to determine a media type of both sides thereof. When a Caller informs all codec information being used by itself of a Callee, the Callee may determine one of the codec information to generate the multimedia stream session. Even though it does not correspond to a type of SDP/SIP, the SIP may transmit information such as a text (Simple Text), XML.

The SIP may send a Body Contents to all both Request / Response. The SIP may connect the media or transmit voice mail information according to contents.

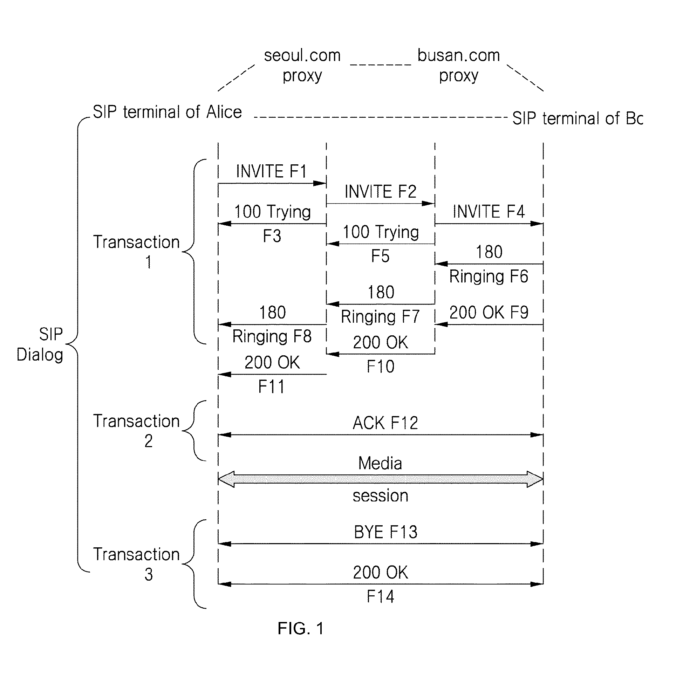

FIG. 1 is a reference diagram illustrating a protocol flow in a SIP (Session Initiation Protocol) environment. Referring to FIG. 1, a messaging flow using the SIP is illustrated in more detail.

A SIP Entity may communicate by using a Transaction. When the Transaction is started for a Request (e.g., an INVITE) requesting a specific action, the SIP may generate a response up to a last Response (2xx, 3xx, 4xx, 5xx, 6xx response). The first generator of a SIP Request corresponds to a SIP Client, a subject answering the Transaction corresponds to a SIP Server and a communication using the SIP may use many Transactions.

FIG. 1 shows a general example for a SIP message being exchanged between two users. Alice is calling Bob by using a SIP URI (Uniform Resource Identifier) similar with a format of an email address. In this example, Alice may have the SIP URI like as "sip:alice@seoul.com" and the SIP may offer a Secure URI corresponding to SIPS URI for this. This may be represented like as "sips:alice@seoul.com". In general, a call formed with the SIP URI transmits a SIP message of the caller with the UDP. However, when a TLS (Transport Layer Security) coding the message to transmit the coded message to a domain of the Callee is used, the transmission has an effect where a security is strengthen.

The SIP may use a Request type. For example, the Request type corresponds to REGISTER, INVITE, ACK, CANCLE, BYE, OPTIONS, PRACK, SUBSCRIBE, NOTIFY. In this example, the INVITE defines an action where the SIP Client (e.g., Alice) generates a call with another SIP terminal (Bob).

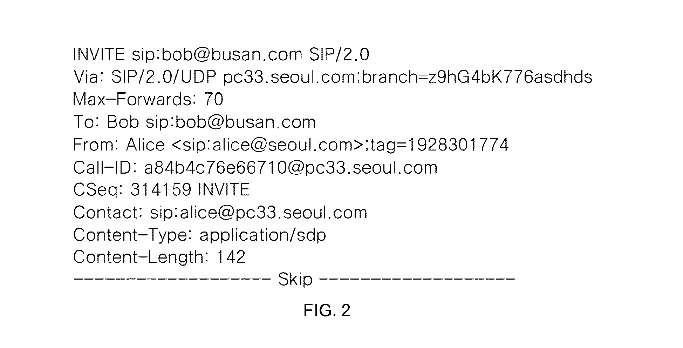

FIG. 2 is a reference diagram illustrating one example for an INVITE message of FIG. 1 and the SIP server of seoul.com for FIG. 1 is a SIP server being known for a Proxy server. The Proxy server may receive a SIP Request to transmit messages instead of a requester. The Proxy server receives an INVITE Request message to transmit Trying Response100 to a SIP terminal of Alice. In an example of FIG. 1, the Trying Response100 shows that the INVITE Request is received and an operation by Proxy is performed for routing the INVITE as a destination. The Proxy server of the Seoul.com may search for the Proxy server supporting a busan.com domain in DNS to transmit INVITE message and may add the own IP address to Via header when the Proxy server of the busan.com receives the INVITE message to transmit the own IP address to SIP terminal of Bob.

The SIP terminal of Bob receive the INVITE message to inform Bob of an arrival of a call from Alice for determining whether Bob responds to a call of Alice (Ringing). The SIP terminal of Bob may inform such status by transmitting Ringing Response 180.when Bob picks up a receiver, the SIP terminal may transmit OK response 200 to inform a status when the call is responded. The OK response 200 may include a SDP Media explanation for any Session type that Bob may connect with Alice.

A terminal of Alice may send ACK corresponding to an awareness message to check an approval for OK Final response 200 being sent by Bob. In this case, the ACK may be directly transmitted from the terminal of Alice to the terminal of Bob without passing through the two Proxy servers. Media Sessions of Alice and Bob are started and a Media Packet may be transmitted by using a format being consented in a SDP exchange.

When a call is terminated, Bob may firstly terminate a connection and may generate a BYE message. The BYE message is transmitted to the terminal of Alice and the terminal of Alice may check a receipt of the BYE with the OK

Response 200 and may terminate the Session and the BYE Transaction.

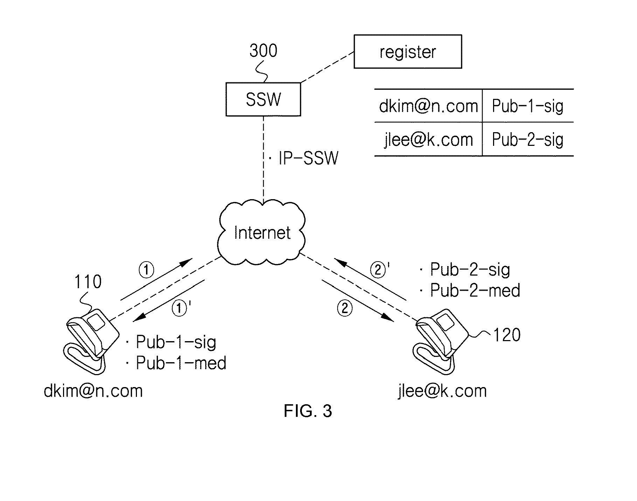

An example embodiment of the SBC (Session Border Controller) in a general network environment will be described referring to FIGS 3 through 8.

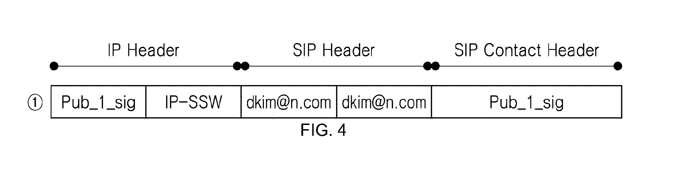

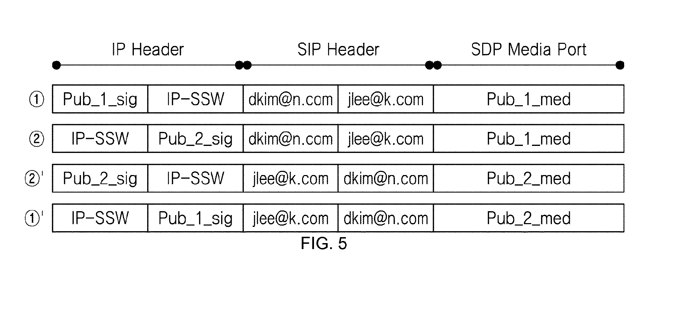

FIG. 3 is a block diagram representing a VoIP terminal and a SSW (Soft Switch) in a general network environment where a SBC apparatus is unapplied. FIG. 4 is an example showing a content of the packet in each of step for illustrating an IP registration in an example of FIG. 3 and FIG. 5 is an example showing a content of the packet in each of step for illustrating an INVITE process in an example of FIG. 3.

The signaling channel may be connected with the media stream in order that the Call is generated to make a call. The SIP is operated based on a RFC 3261 and may include a device for passing NAT. However, a problem may be generated for processing the call and this is because various terminals does not support a function related with the NAT. When a terminal in any private network intactly sends the own IP address to the SIP message, UAS receiving the own IP address may not send a response by using a corresponding IP address. Therefore, many terminals using the UDP may not process the SIP message through the NAT. For solving such problem, many terminals uses TCP to transmit and receive the message regardless of the NAT Traversal, however, this is limited for the Signaling Channel not the Media Channel. That is, the Media Channel may not solve such problem.

The SBC is an apparatus where the apparatus is arranged between terminals in the NAT environment and a call processing device and adjusts the signaling channel and media channel to smoothly connect the call. Because recent networks essentially use NAT/Firewall function, the SBC may be used for providing VoIP service.

In FIG. 3, there are a first VoIP terminal (source VoIP terminal) including a SIP URI corresponding to dkim@n.com and a second VoIP terminal (target VoIP terminal) including the SIP URI corresponding to jlee@k.com. The first terminal may register their presence. An IP address corresponding to a present address of "dkim@n.com" is registered to Registrar through a Registration.

FIG. 4 is an example showing a registration procedure of the packet and the registration procedure of the packet is described referring to the FIG. 4. Herein, it is assumed that the VoIP terminal already knows an address of IP-SSW. For example, the source VoIP terminal may use a DNS lookup or a preset address to access the IP-SSW. An original number in a left side of each packet in FIG. 4 indicates a packet corresponding to each procedure in FIG. 3.

In below, the packet is represented by 5 blocks. This is used for conveniences' sake to explain an example embodiment but should not be used to limit a scope of the present invention. Therefore, an actual packet may be formed by further including additional information.

A first block of the packet represents source address information of the packet (e.g., IP address and port of source VOIP) and a second block of the packet represents destination address information (e.g., IP address and port of target VoIP). Hereinafter, the first block and the second block are integrated to be referred to as IP header. A third block represents source URI information (shown as "dkim@n.com") and a fourth block represents destination URI information (shown as "jlee@k.com"). Hereinafter, the third block and the fourth block are integrated to be referred to as a SIP header and the third block is described as From address and the fourth block is described as To address. A fifth block represents address information associated with a channel. The address information associated with the channel may be differently formed for each procedure (registration procedure and INVITE procedure). For example, the address information associated with the channel may represent the source address information (source IP address and port number) as a SIP contact header in the registration. For another example, in the INVITE, the address information associated with the channel may represent SDP address information (IP address and port number) for a media in the SDP.

"pub_1_sig" indicates source address information (IP address and port number) being used for signaling by the first VoIP terminal. For example, "pub_1_sig" may be represented as 220.117.211.171:9876. "pub_ssw" indicates address information (IP address and port number) of a soft switch (SSW). For example, "pub_ssw" may be represented as 10.10.10.100:5060.

A packet provided from the first VoIP terminal 110 may reach a SSW 300 and the SSW 300 may check information of the packet (IP header and From address) and associate pub_1_sig with dkim@n.com to store to the association in registrar in connection with and.

The second VoIP terminal 200 performs a procedure similar with the first VoIP terminal 100 to store a relationship between jll@k.com and pub_2_sig in the registrar.

Fig. 5 is an example showing a process of forming a packet of a call, Referring to Fig. 5 illustrates for an INVITE course.

The first VoIP terminal 110 provides a pub_1_med (i.e., IP address and port number, for example, 220.117.211.171:8000) to the SSW 300 with the SDP. The SSW 300 checks a received packet and by sending a packet to jlee@k.com corresponding to a To address, the SSW may set a pub_2_sig as the destination address information by using the stored information on the registrar. Also, the SSW 300 may write the own address information as the source address information. The SSW 300 may generate the second packet and provide the packet to the second VoIP terminal 200. Herein, the address information associated with the channel consists of the SDP media address information for the first VoIP terminal.

When the second VoIP terminal 120 receives a second packet, the second VoIP terminal 120 may generate a second' packet as a response to provide the second' packet to the SSW 300. When the SSW receives the second' packet, the SSW 300 may check To address (i.e., the fourth block) to update address information of destination address information and may generate a first' packet to provide the first' packet to the first VoIP terminal 110. Herein, the address information associated with the channel includes of the SDP media address information for the second VoIP terminal.

In a result of transmitting and receiving the first packet and the first' packet, the first and second VoIP terminals 120 respectively maintain address information (e.g., Pub_2_med and Pub_1_med) for a media transmission. Therefore, the first and second VoIP terminals 120 may use a corresponding address to directly form a media stream session therebetween and may transmit and receive the media through the formed session to provide the VoIP service.

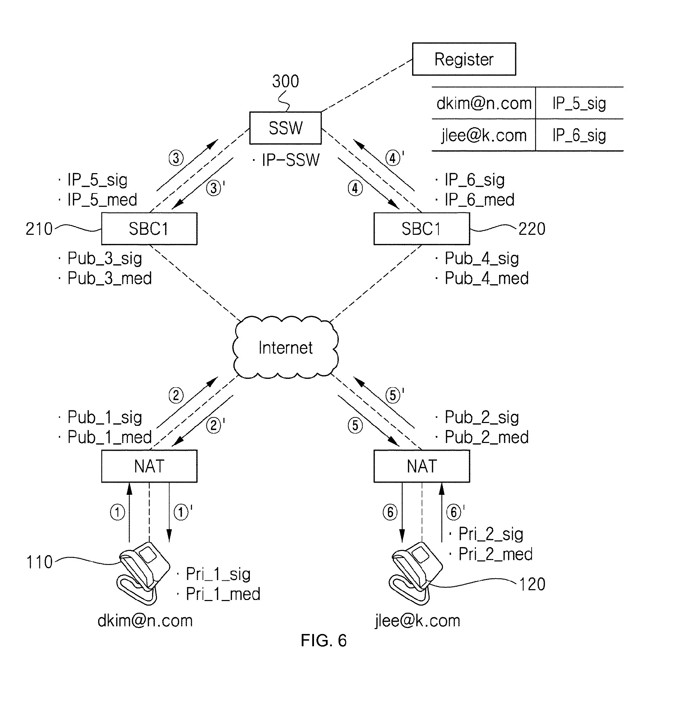

A described explanation in FIGS 3 through 5 is an example causing the VoIP terminals to be directly connected with an internet, however, general VoIP terminals may be connected to the internet through a specific network. Various example embodiments being connected to the internet through the specific network will be described referring to FIGS 6 through 11.

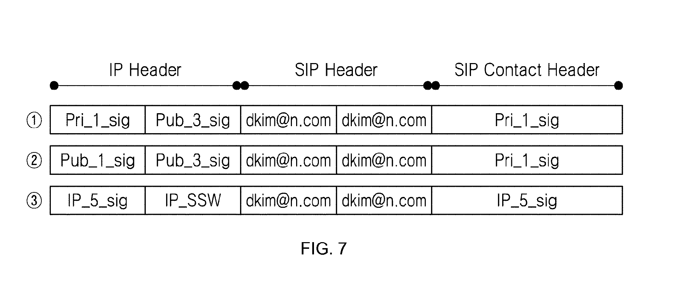

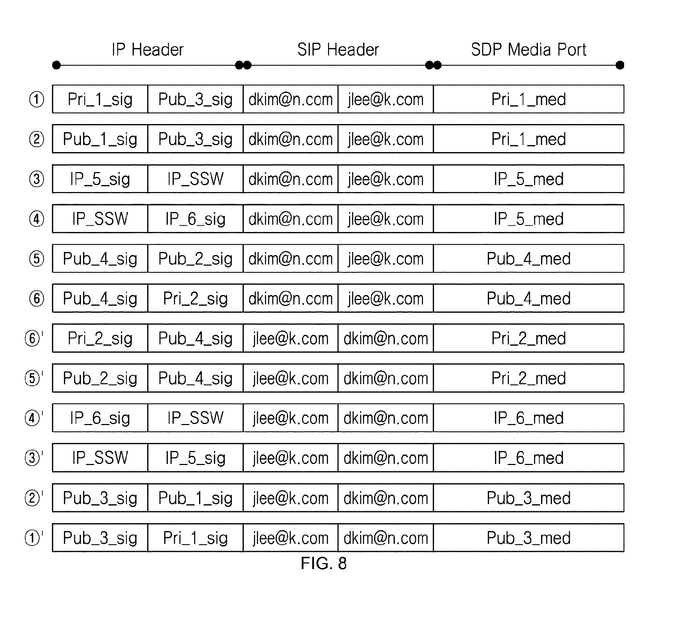

Fig. 6 is a block diagram representing the VoIP terminal, SBC apparatus and SSW (Soft Switch) in a general network environment where a SBC apparatus applied, FIG. 7 is a reference diagram showing a content of the packet in each step for illustrating the IP registration in an example of FIG. 6 and FIG. 8 is a reference diagram showing a content of the packet in each step for illustrating the INVITE process in an example of FIG. 6. The examples shown in FIG.S 6 through 9 are an example embodiment where the VoIP terminals 100 access to the internet through the NAT and an example embodiment where VoIP terminals 100 use a private IP being provided through the NAT.

FIG. 7 is a reference diagram showing a packet format of a registration procedure being performed on the first VoIP terminal 110 and the registration procedure is described referring to FIG. 7. Herein, it is assumed that the first VoIP terminal 110 already informs an address of a first SBC apparatus 210. It is possible to a DNS lookup or may be pre-stored in the first VoIP terminal 110 as a predetermined value.

When the first packet being provided from the first VoIP terminal 110 to the NAT is compared with the second packet being provided from the NAT to the first SBC apparatus 210, source address information of the second packet is changed from a private IP to a public IP (from pri_1_sig to pub_1_sig) by the NAT. The second packet is provided to the first SBC apparatus 210 and the first SBC apparatus 210 interprets the second packet to check the private IP, the public IP and the URI of the first VoIP terminal 110 and may assign an IP address for the first VoIP terminal 110 (IP_5_sig) to associate and store the assigned IP address with each other. Herein, the first SBC apparatus 210 may check an URI ("dkim@n.com") of the first VoIP terminal 110 from a SIP header of the second packet, check the public IP (pub_1_sig) of an IP header and check the private IP (pri_1_sig) of a SIP contact header.

The first SBC apparatus 210 may update the second packet to the third packet based on the stored information to provide the third packet to a SSW 300. That is, the first SBC apparatus 210 may change the public IP and the private IP of the first VoIP terminal 110 being stored in the source address information and the address information associated with the channel of the second packet as an address (IP_5_sig) assigned to the first VoIP terminal 110.

A second SBC apparatus 220 performs a described operation for the second VoIP terminal 120 and a Registrar may associate and store dkim@n.com with the IP_5_sig and associate and store jlee@k.com with the IP_6_sig.

FIG. 8 is an example showing a packet in the process of forming a call, describes the procedure of forming the call referring to FIG. 8. Herein, it is assumed that a call is tried from the first VoIP terminal 110 to the second VoIP terminal 120.

The first VoIP terminal 110 generates the first packet to provide the first packet to the NAT. The second packet changed to the public IP by the NAT may reach the first SBC apparatus 210.

The first SBC apparatus 210 generates or updates the third packet based on the received second packet to transmit the third packet to the SSW 300. In more detail, the first SBC apparatus 210 changes the source address information to an IP assigned to the first SBC apparatus 210 (from Pub_1_sig to IP_5_sig) and changes destination address information from an own address to an address of the SSW 300. Also, the first SBC apparatus 210 may change the address information associated with a channel (i.e., SDP media port information) to the IP assigned to the first SBC apparatus 210 in the private IP of the first VoIP terminal 110. Herein, the first SBC apparatus 210 may use a relationship between dkim@n.com, pub_1_sig and IP_5_sig to perform a change of a described IP address.

The first SBC apparatus 210 may register new relationship information for a request for setting the call. For example, the first SBC apparatus 210 may store by setting a relationship between dkim@n.com, j0lee@k.com (acquisition from the SIP header), Pri_1_med (acquisition from the SDP media port information) and IP_5_med (address being used for the media stream session being assigned by itself). Herein, updating the second packet to the third packet in the first SBC apparatus 210 is implemented as a B2BUA method or implemented as the NAT changing a content of the packet. That is, the present invention may not have limitation for specific implementations for updating the packet but the SBC apparatus 200 may store a relationship between IP addresses (including port information) and perform a change of the address of the packet based on the stored relationship.

The SSW 300 uses the registrar for the received third packet to perform a predetermined address conversion. The SSW 300 uses the registrar and to check an IP_6_sig (an address assigned by the second SBC apparatus) as an address of jlee@k.com and applies the checked address to generate the fourth packet and provide the generated fourth packet the second SBC apparatus 220.

The second SBC apparatus 220 generates a fifth packet based on the received fourth packet to provide the fifth packet to the NAT of the second VoIP terminal. In more detail, the second SBC apparatus 220 may change the source address information and the address information associated with the channel by using the own public IP and may use the public IP of the second VoIP terminal 120 as the destination address information. The second SBC apparatus 220 may use the relationship between jlee@k.com, Pub_2_sig and IP_6_sig being informed in the registration procedure to perform the address conversion.

The second SBC apparatus 220 may register new relation information according to such call setup request. The second SBC apparatus 220 may associate dkim@n.com, jlee@k.com (acquisition from the SIP header), IP_5_med (acquisition from the SDP media port) and pub_4_med (address for media stream session assigned by itself) to store the associated information.

The NAT and the second VoIP terminal 120 perform an operation corresponding to the first VoIP terminal 110.

The actual voice media may be transmitted by Pub_1_med and Pub_3_med between the first VoIP terminal 110 and the first SBC apparatus 210, may be transmitted by IP_5_med and IP_6_med between the first SBC apparatus 210 and the second SBC apparatus 220 and may be transmitted by Pub_4_med and Pub_2_med between the second SBC apparatus 220 and the second VoIP terminal 120 based on the signaling message.

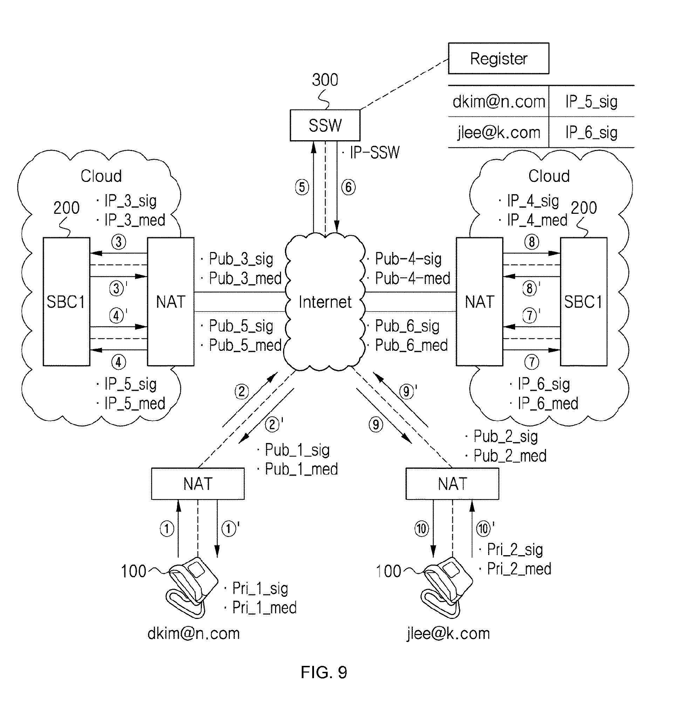

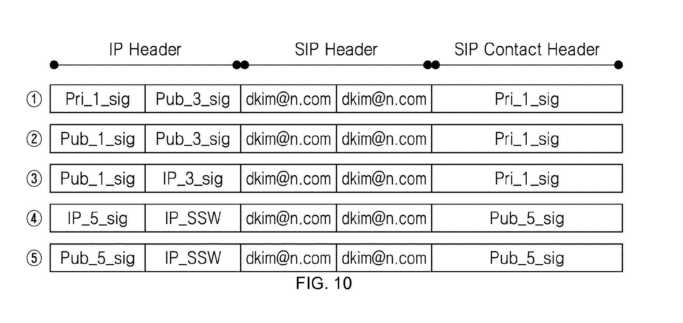

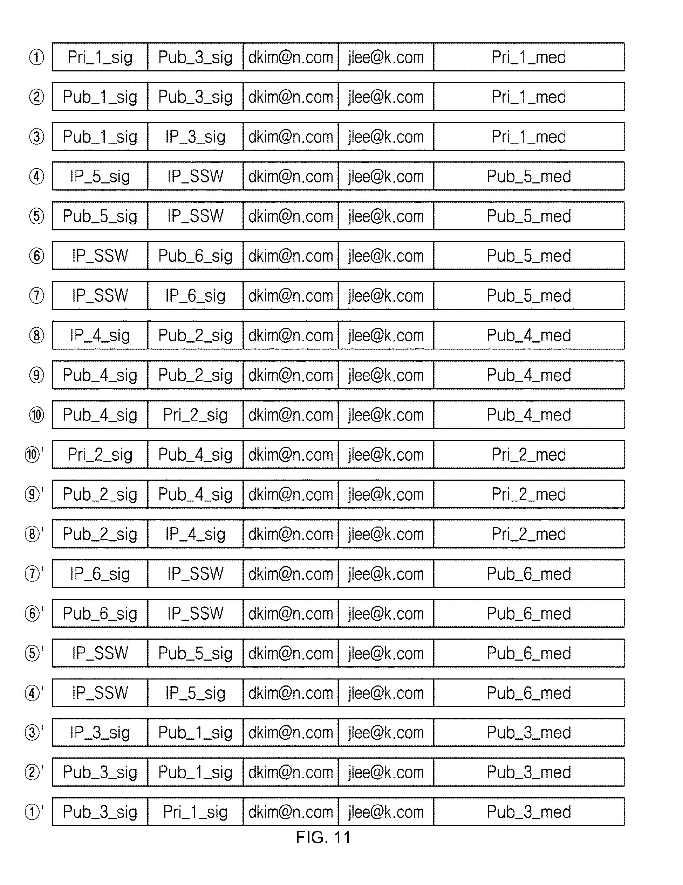

FIG. 9 is a block diagram representing a VoIP terminal, a SBC apparatus and a SSW (Soft Switch) in a cloud network environment where a SBC apparatus is applied in a cloud network. FIG. 10 is a reference diagram showing a content of a packet in each step for illustrating an IP registration in an example of FIG. 9 and FIG. 11 is a reference diagram showing a content of a packet in each step for illustrating a signaling formation process in an example of FIG. 9. FIGS 9 through 11 are an example where the SBC apparatus is included in the cloud network and an example using the SBC apparatus in the cloud network to form a communication session between the VoIP terminals using. Herein, it is assumed that the NAT may generally exist In front of the cloud network.

Fig. 10 is a reference diagram showing a packet format being connected with the first VoIP terminal 110 to register an IP in the SSW 300.

The first VoIP terminal 110 uses own private address to generate the source address information and the address information associated with the channel, sets the public IP address corresponding to the first SBC apparatus 210 as the destination address information to generate the first packet and to provide the first packet to own NAT. Herein, because the first packet is used for the registration, an URI of the first VoIP terminal 110 may be written to the SIP header (the third and fourth block).

Because the NAT performs the address conversion for the IP header, the NAT may change the source address information formed with the private IP of the first VoIP terminal 110 to public IP of the first VoIP terminal 110 to generate the second packet and provide the public IP to the NAT of the first SBC apparatus 210.

The NAT for the first SBC apparatus 210 may perform the conversion between the private IP address and the public IP address for the first SBC apparatus 210 in IP header area. When the NAT for the first SBC apparatus 210 receives the second packet, the NAT may change the destination address information to the private IP of the first SBC apparatus 210 to generate the third packet and provide the packet to the first SBC apparatus 210.

When the first SBC apparatus 210 receive the third packet, the first SBC apparatus 210 may change the destination address information to the address for the SSW 300. The first SBC apparatus 210 may associate with the first VoIP terminal 110 to generate and assign an IP address (IP_5) to itself and may use the assigned IP address to update the source address information and the address information associated with the channel. Herein, the first SBC apparatus 210 may apply the own public IP to update the address information associated with the channel (Pub_5_sig). The first SBC apparatus 210 may perform the update to generate the fourth packet and provide the fourth packet to the NAT of the first SBC apparatus 210.

Because the NAT of the first SBC apparatus 210 performs an IP conversion on an IP header level for fourth packet, the NAT may change an IP address of the first SBC apparatus 210 stored in the source address information of fourth packet to the public IP.

FIG. 11 is a reference diagram showing a packet of the process for forming a call between the first VoIP terminal and the second VoIP terminal in an example of FIG. 9. Herein, it is assumed that a call is tried by the second VoIP terminal 120 at the first VoIP terminal 110.

The first VoIP terminal 110 may use the own private address to generate the source address information and the address information associated with the channel may set the public IP address corresponding to the first SBC apparatus 210 as the destination address information to generate the first packet and provide the packet to the NAT of the first VoIP terminal 110. Herein, the first packet is the packet for generating the call so that the URIs of first and the second VoIP terminals 110, 120 are respectively written on the SIP header (the third and the fourth block).

Because the NAT performs the IP address conversion for IP header, the NAT may change the source address information formed of the private IP of the first VoIP terminal 110 to the public IP of the first VoIP terminal 110 to generate the second packet and to provide the second packet to the NAT of the first SBC apparatus 210.

The NAT of the first SBC apparatus 210 may perform the conversion between the private IP address and the public IP address for the first SBC apparatus 210 for IP header area. When the NAT of the first SBC apparatus 210 receives the second packet, the NAT may change the destination address information to the private IP of the first SBC apparatus 210 to generate the third packet and provide the third packet to the first SBC apparatus 210.

When the first SBC apparatus 210 receives the third packet, the first SBC apparatus 210 may change the destination address information to the address for the SSW 300. The first SBC apparatus 210 may associate with the first VoIP terminal 110 to generate and assign an IP address (IP_5) to the first SBC apparatus 210, may use the IP address to update the source address information and the address information associated with the channel. Herein, the first SBC apparatus 210 may apply the own public IP to update the address information associated with the channel (Pub_5_med) and the first SBC apparatus 210 may perform the update to generate the fourth packet and provide the fourth packet to the NAT of the first SBC apparatus 210.

Because the NAT of the first SBC apparatus 210 performs an IP conversion in an IP header level for fourth packet, the NAT may change an IP address of the first SBC apparatus 210 stored in source address information of fourth packet to the public IP to generate a fifth packet and provide the fifth packet to the SSW 300.

The SSW 300 may use the registrar to perform a predetermined address conversion for the received fifth packet. The SSW 300 may use the registrar to check IP_6_sig (an address assigned by the second SBC apparatus) as an address of jlee@k.com and apply IP-6-sig to update the destination address information. Also, the SSW 300 changes the source address information as the address of itself to generate a sixth packet and provide the sixth packet to the NAT of the second SBC apparatus 220.

The NAT of the second SBC apparatus 220, the second SBC apparatus 220 and the second VoIP terminal 120 perform a corresponding conversion in the above description. That is, the second VoIP terminal 120 receives the public IP (Pub_4_med) associated with the second SBC apparatus 220 as address information for forming media stream session.

Likewise, the first VoIP terminal 110 may use the Pub_3_med associated with the second SBC apparatus 220 as the address information for forming media stream session through the first' through the tenth' packets.

Like this, an example embodiment may use the SBC apparatus in the cloud network to form a communication session between the VoIP terminals. Also, in the address registration process and the session formation process, the SBC apparatus may update (i) the SIP header and (ii) the SIP contact header or the SDP media port information to perform the session formation. For this, the SBC apparatus 200 may apply the own public IP to update the address information associated with the channel.

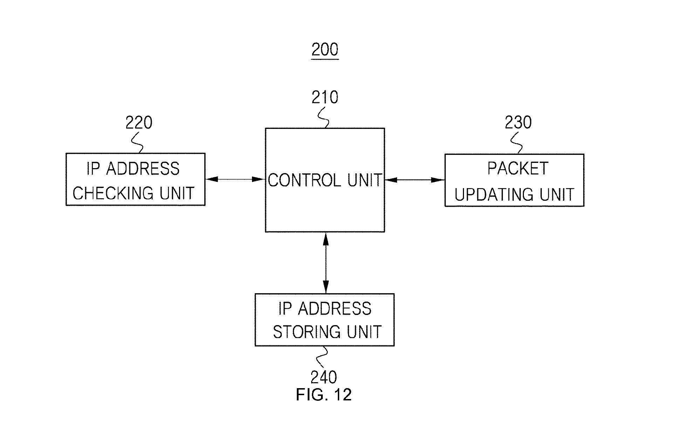

FIG. 12 is a block diagram illustrating a SBC apparatus according to an example embodiment of the present invention.

Referring to the FIG. 12, the SBC apparatus 200 may include a control unit 210, an IP address checking unit 220 and a packet updating unit 230. In one embodiment, the SBC apparatus 200 may further include an IP address storing unit 240.

Because a description for this application is focused for an IP address conversion of the SBC apparatus performing the VoIP service in the cloud network, a description for a general format of the SBC apparatus is omitted. That is, it is obvious that various components for a predetermined security function in the VoIP environment is included in the SBC apparatus.

The control unit 210 may control other components of the SBC apparatus 200 to operate the SBC apparatus.

When the control unit 210 receives IP registration request for the VoIP communication from the VoIP terminal 100 and a request for forming the signaling channel or the media channel, the control unit 210 may provide the requests to the IP address checking unit 220 or the packet updating unit 230.

The IP address checking unit 220 may check a private IP address and a public IP address of the SBC terminal. For example, the IP address checking unit 220 may associate the own private IP address with the NAT to check the own public IP address.

In one embodiment, the IP address checking unit 220 may request an assignment for the public address to the NAT to check the own public IP address. For example, when the IP address checking unit 220 requests the public IP address including a specific IP value to the NAT connected with the cloud network including the IP address checking unit 220 to receive the confirmation for the public IP address, the IP address checking unit 220 may check the specific IP value as the own public IP address. The IP address checking unit 220 may map the own public IP address with the own private IP address.

When the public IP address is automatically assigned in the NAT, the IP address checking unit 220 may perform a predetermined operation for checking the own public IP address for a corresponding NAT.

In one embodiment, the IP address checking unit 220 may use an API to check the own public IP address from the NAT. In a case of AWS EC2, the IP address checking unit 220 may use the API (ec2-describe-instances) being provided the AWS EC2 to check the own public IP address.

In another embodiment, the IP address checking unit 220 may use HTTP query to check the own public IP address and the own private IP address. For example, the IP address checking unit 220 may use following query to obtain the own private IP address.

curl http://169.254.169.254/latest/meta-data/local-ipv4

Also, the IP address checking unit 220 may use following query to obtain the own public IP address.

curl http://169.254.169.254/latest/meta-data/public-ipv4

In one embodiment, the IP address checking unit 220 may provide private and public identified own IP address to the IP address storing unit 240.

In one embodiment, the IP address checking unit 220 may detect whether the change of the IP address is generated and when the own private IP address is changed, the IP address checking unit 220 may apply the change to update the IP address. When the update is generated, the IP address checking unit 220 may provide the updated own private IP address to the packet updating unit 230 or the IP address storing unit 240.

In one embodiment, the IP address checking unit 220 may collect information for a network including a corresponding SBC apparatus. For example, the IP address checking unit 220 may check whether the network including the corresponding SBC apparatus corresponds to a cloud network or passes the NAT to be accessible to the internet network based on whether the private IP exists or information for an assignment subject.

In one embodiment, when a SBC instance is generated, an own private IP address may internally be assigned in the cloud network for the SBC instance and the IP address checking unit 220 may check the own private IP address and may request the public IP address accessible from an outside to the NAT to check. The IP address checking unit 220 may associate the public IP address being provided from the NAT with the private IP address to store.

The packet updating unit 230 may analyze the packet being provided from the source VoIP terminal and may perform the IP address conversion. For example, when the packet updating unit 230 receives the packet for the VoIP communication from a source VoIP terminal, the packet updating unit 230 may analyze the corresponding packet and may apply the own public IP address to update the address information associated with the channel for forming the channel with the target VoIP terminal included in the corresponding packet.

The packet updating unit 230 may analyze a packet in an IP header of packet (source address information and the destination address information), a SIP header (a source URI information and a destination URI information) and SIP contact header or to a SDP media port header (the address information associated with the channel) for the address conversion. The packet may include at least one of the source address information, the destination address information, the source URI information, the destination URI information and the address information associated with the channel, Herein, the address information associated with the channel may correspond to address information for the registration or forming the signaling channel own (the SBC apparatus) public IP address be represented and may use the public IP address to be represented.

The packet updating unit 230 may perform a predetermined process for registering the source VoIP terminal to the SSW 300. For example, the packet updating unit 230 may associate the own public IP address with the URI (Uniform Resource Identifier) address of the source VoIP terminal to provide the packet to the SSW 300 for registering the own public IP address to the SSW. For this, the packet updating unit 230 may apply and update the own public IP to the address information associated with the channel as described above in FIGS 6 through 11.

The packet updating unit 230 may perform the address conversion to form the signaling channel for forming the media stream session between the source VoIP terminal and the target VoIP terminal. Also, the packet updating unit 230 may generate or maintain the media stream session being associated with the source VoIP terminal in the formed media stream session.

In one embodiment, the packet updating unit 230 may analyze the packet to check whether it is the corresponding packet for forming the signaling channel may apply the own public IP address when it is the corresponding packet for forming the signaling channel to update the source address information of the packet and the address information associated with the channel and to provide the source address information of the packet and the address information associated with the channel to the SSW.

In one embodiment for IP registration, the packet updating unit 230 may change the destination address information being associated with own address to the address of SSW and apply the own public IP address to update an address information associated with the channel of a corresponding packet.

In one embodiment, the packet updating unit 230 may analyze the packet to check whether it is a packet for forming a signaling channel generating a call between the source VoIP terminal and the target VoIP terminal and may apply the own public IP address when it is a packet for forming the signaling channel generating the call between the source VoIP terminal and the target VoIP terminal to update the address information associated with the channel of the packet.

In one embodiment, when the packet updating unit 230 receives the response packet corresponding to the packet being sent for forming the signaling channel from the target VoIP terminal, the packet updating unit 230 may store the public IP address of the other side SBC apparatus stored in the address information associated with the channel of the corresponding response packet,.

In one embodiment, when the signaling channel formation is successfully completed and the media stream session is formed, the packet updating unit 230 may use the public IP address of pre-stored in the other side of the SBC apparatus to transmit or receive media data for the VoIP service. For example, when the signaling channel formation is successfully completed, the packet updating unit 230 may store the public IP address of the other side SBC apparatus as the address information associated with the channel to form the media stream session passing to the other side SBC apparatus.

In one embodiment, the packet updating unit 230 may check information of the network including the packet updating unit 230 to determine a type of an IP address being applied the address information associated with the channel of the packet. For example, the IP address checking unit 220 may provide information for whether the NAT exists in the front end of the network including the IP address checking unit 220 or whether the network including the IP address checking unit 220 correspond to the cloud network and the packet updating unit 230 may use own public IP based on the information, whether the address information associated with the channel is updated (examples of FIGS 9 through 11) or own basic IP to determine whether the address information associated with the channel is updated (examples of FIGS 6 through 8).

The IP address storing unit 240 may store the private IP and the public IP for the SBC apparatus being provided by the IP address checking unit 220.

In one embodiment, the IP address storing unit 240 may further include and store the IP address information for the VoIP terminal being provided the packet updating unit 230.

In one embodiment, the IP address storing unit 240 may associate with the specific VoIP by the packet updating unit 230 to further include and store the IP address information (e.g., IP_5 in FIG.9).

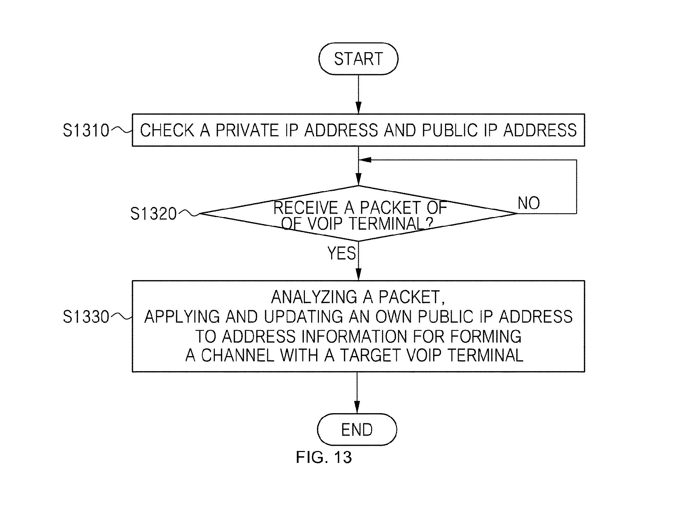

FIG. 13 is a flowchart illustrating a method for operating a SBC apparatus according to an example embodiment of the present invention. Because an example embodiment showed in FIG. 13 is performed on the described the SBC apparatus 200, an overlapped explanation will be omit. However, the ordinary skilled person may clearly understand an example embodiment of a method for operating SBC being described in below.

Referring to FIG. 13, the SBC apparatus 200 may check the own private IP (Internet Protocol) address being used on the cloud network and the own public IP address being separated by an association with the NAT (Step S1310).

When the SBC apparatus 200 receives the packet for the VoIP communication from the source VoIP terminal 100 (Step S1320), the SBC apparatus 200 may analyze the received packet to apply and update the address information associated with a channel for forming the channel with the packet VoIP terminal 100 included in a corresponding packet (Step S1330).

In one embodiment for the step S1310, when the SBC instance is generated, the SBC apparatus 200 may check an own private IP address internally being assigned in the cloud network according to the SBC instance and request the public IP address accessible to itself from an outside of the cloud network to the NAT. The SBC apparatus 200 may associate and store the public IP address being provided from the NAT with the private IP address.

In one embodiment of the step S1320 through S1330, the SBC apparatus 200 may associate the own public IP address with the URI (Uniform Resource Identifier) address of the source VoIP terminal to form the signaling channel or may form the media stream channel for generating a call between the source VoIP terminal and the target VoIP terminal.

In one embodiment, the packet being provided from the source VoIP terminal may include at least one of source address information, destination address information, source URI information, destination URI information and the address information associated with the channel. Herein, the address information associated with the channel may correspond to address information being used for forming the signaling channel and the media stream channel and may be represented by using the own public IP address of the SBC apparatus.

In one embodiment of the step S1320 to S1330, the SBC apparatus 200 may change the destination address information being associated with own address to a SSW address and may apply the own public IP address to update the address information associated with the channel of the corresponding packet. The SBC apparatus 200 may apply the own private IP address to further update the source address information of the packet. Herein, the SBC apparatus 200 may store a URI (Uniform Resource identifier) of the source VoIP terminal 100 as the source URI information and the destination URI (Uniform Resource identifier) information of the packet.

In one embodiment of the step S1320 through S1330, the SBC apparatus 200 may analyze a response packet provided from the target VoIP terminal and may apply the own public IP address to update the address information associated with the channel of the response packet.

In one embodiment of the step S1320 through S1330, the SBC apparatus 200 may apply the own private IP address to update the source address information being associated and stored with the address of the SSW 300.

Although embodiments have been described with reference to a number of illustrative embodiments thereof, it should be understood that numerous other modifications and embodiments can be devised by those skilled in the art that will fall within the spirit and scope of the principles of this disclosure.

## Claims

1. A SBC(Session Boarder Controller) operating method being performed on a SBC apparatus, the SBC apparatus passing a NAT(Network Address Translation) to be operated in a cloud network accessible to Internet, the SBC apparatus being connectable with a SSW(Soft Switch) through the Internet and performing a predetermined address translation for offering a VoIP(Voice over Internet Protocol), the method comprising:
(a) checking an own public IP address being separated by an association with an own private IP (Internet Protocol) address and the NAT being used in the cloud network; and
(b) analyzing a packet for a VoIP communication when the packet is received from a source VoIP terminal, applying and updating the own public IP address to address information associated with a channel, the address information associated with the channel forming a channel with a target VoIP terminal being included in the packet.

2. The method of claim 1, wherein the step (a) includes
(a-1) checking an own private IP address internally being assigned in the cloud network when a SBC instance is generated;
(a-2) requesting the public IP address accessible to itself from an outside of the cloud network to the NAT; and
(a-3) associating and storing the public IP address being provided from the NAT with the private IP address.

3. The method of claim 1, wherein the step (b) includes at least one of
(b-1) forming a signaling channel associating a URI (Uniform Resource Identifier) address of the source VoIP terminal with the own public IP address to be registered in the SSW; and
(b-2) forming a media stream channel for generating a call between the source VoIP terminal and the target VoIP terminal.

4. The method of claim 1, wherein the packet includes at least one of source address information of a corresponding packet, destination address information, source URI information, destination URI information and the address information associated with the channel.

5. The method of claim 4, wherein the address information associated with the channel corresponds to address information being used for the registration or forming the signaling channel and is represented by using the own public IP address.

6. The method of claim 4, wherein the step (b-1) includes
changing and determining the destination address information being associated with own address to an address of SSW; and
applying the own public IP address to update the address information associated with the channel of the corresponding packet.

7. The method of claim 6, wherein the step (b-1) further includes applying the own private IP address to update the source address information of the packet.

8. The method of claim 6, the packet stores a URI (Uniform Resource identifier) of the source VoIP terminal as the source URI information and the destination URI information of the packet.

9. The method of claim 4, wherein the step (b-2) further includes analyzing a response packet provided from the target VoIP terminal and applying and updating own public IP address to the address information associated with the channel of the response packet.

10. The method of claim 9, wherein the step (b-2) further includes
applying and updating the own private IP address to the source address information being associated with the address of SSW;

11. A SBC(Session Boarder Controller) apparatus passing NAT(Network Address Translation) to be operated in a cloud network accessible to Internet, the SBC apparatus being connectable with the SSW(Soft Switch) through the Internet and performing a predetermined address translation for offering VoIP (Voice over Internet Protocol), the apparatus comprising
an IP address checking unit configured to check a own public IP (Internet Protocol) address being separated by being associated with an own private IP address and the NAT being used in the cloud network; and
a packet updating unit configured to analyze a packet for a VoIP communication when the packet is received from a source VoIP terminal and to update an own public IP address to address information associated with a channel, the address information associated with the channel forming a channel with a target VoIP terminal being included in the packet.

12. The apparatus of claim 11, wherein the IP address checking unit uses the NAT to check to check own private IP address internally being assigned in the cloud network and the public IP address accessible to itself from the outside of the cloud network.

13. The apparatus of claim 12, further comprising:
an IP address storing unit configured to match and store the private IP address checked by the IP address checking unit and the public IP address and
wherein the IP address checking unit applies a change when the change for at least one of the private IP address and the public IP address is generated to provide the changed IP address to the IP address storing unit.

14. The apparatus of claim 11, wherein the packet includes at least one of source address information, destination address information, source URI information, destination URI information and address information associated with the channel.

15. The apparatus of claim 14, wherein the packet analyzes the packet to check whether it is a corresponding packet for a registration, applies the own public IP address and when it is a corresponding packet for a registration and updates the source address information of the packet and the address information associated with the channel to provide the updated source address information and address information to the SSW.

16. The apparatus of claim 15, wherein the packet updating unit decides a corresponding packet as a packet for registering the IP address when the source URI information of the packet and the destination URI information are same.

17. The apparatus of claim 14, wherein the packet updating unit analyzes the packet to check whether it is a packet for forming a signaling channel generating a call between the source VoIP terminal and the target VoIP terminal and applies the own public IP address when it is a packet for forming a signaling channel generating a call between the source VoIP terminal and the target VoIP terminal to update the address information associated with the channel.

18. The apparatus of claim 17, wherein the packet updating unit stores the public IP address of the other SBC apparatus being stored in the address information associated with the channel of a corresponding response packet, when a response packet being corresponded to the packet is received from the target VoIP terminal.

19. The apparatus of claim 18, wherein the packet updating unit stores the public IP address of the other SBC apparatus as the address information associated with the channel when the signaling channel is successfully formed.

20. A storage medium recording a program, the program executing a SBC(Session Boarder Controller) operating method, the SBC operating method being performed on a SBC apparatus, the SBC apparatus passing NAT(Network Address Translation) to be operated in a cloud network accessible to Internet, the SBC apparatus being connectable with the SSW(Soft Switch) through the Internet and performing a predetermined address translation for offering VoIP (Voice over Internet Protocol), the program comprising:
(a) checking an own public IP address being separated by an association with an own private IP (Internet Protocol) address and the NAT being used in the cloud network; and
(b) analyzing a packet for a VoIP communication when the packet is received from a source VoIP terminal, applying and updating the own public IP address to address information associated with a channel, the address information associated with the channel forming a channel with a target VoIP terminal being included in the packet.

## Amended claims

### Amended claims under Art. 19.1 PCT

1. (amended) A SBC(Session Boarder Controller) operating method being performed on a SBC apparatus, the SBC apparatus passing a NAT(Network Address Translation) to be operated in a cloud network accessible to Internet, the SBC apparatus being connectable with a SSW(Soft Switch) through the Internet and performing a predetermined address translation for offering a VoIP(Voice over Internet Protocol), the method comprising:
(a) checking an own public IP address being separated by an association with an own private IP (Internet Protocol) address and the NAT being used in the cloud network; and
(b) analyzing a packet for a VoIP communication when the packet is received from a source VoIP terminal, applying and updating the own public IP address to address information associated with a channel, the address information associated with the channel forming a channel with a target VoIP terminal being included in the packet,
wherein the step (b) includes at least one of
(b-1) forming a signaling channel associating a URI (Uniform Resource Identifier) address of the source VoIP terminal with the own public IP address to be registered in the SSW; and
(b-2) forming a media stream channel for generating a call between the source VoIP terminal and the target VoIP terminal.

2. (original) The method of claim 1, wherein the step (a) includes
(a-1) checking an own private IP address internally being assigned in the cloud network when a SBC instance is generated;
(a-2) requesting the public IP address accessible to itself from an outside of the cloud network to the NAT; and
(a-3) associating and storing the public IP address being provided from the NAT with the private IP address.

3. (cancelled)

4. (amended) The method of claim 1, wherein the packet includes at least one of source address information of a corresponding packet, destination address information, source URI information, destination URI information and the address information associated with the channel.

5. (original) The method of claim 4, wherein the address information associated with the channel corresponds to address information being used for the registration or forming the signaling channel and is represented by using the own public IP address.

6. (original) The method of claim 4, wherein the step (b-1) includes
changing and determining the destination address information being associated with own address to an address of SSW; and
applying the own public IP address to update the address information associated with the channel of the corresponding packet.

7. (original) The method of claim 6, wherein the step (b-1) further includes applying the own private IP address to update the source address information of the packet.

8. (original) The method of claim 6, the packet stores a URI (Uniform Resource identifier) of the source VoIP terminal as the source URI information and the destination URI information of the packet.

9. (original) The method of claim 4, wherein the step (b-2) further includes analyzing a response packet provided from the target VoIP terminal and applying and updating own public IP address to the address information associated with the channel of the response packet.

10. (original) The method of claim 9, wherein the step (b-2) further includes
applying and updating the own private IP address to the source address information being associated with the address of SSW;

11. (amended) A SBC(Session Boarder Controller) apparatus passing NAT(Network Address Translation) to be operated in a cloud network accessible to Internet, the SBC apparatus being connectable with the SSW(Soft Switch) through the Internet and performing a predetermined address translation for offering VoIP (Voice over Internet Protocol), the apparatus comprising
an IP address checking unit configured to check a own public IP (Internet Protocol) address being separated by being associated with an own private IP address and the NAT being used in the cloud network; and
a packet updating unit configured to analyze a packet for a VoIP communication when the packet is received from a source VoIP terminal and to update an own public IP address to address information associated with a channel, the address information associated with the channel forming a channel with a target VoIP terminal being included in the packet,
wherein the packet updating unit configured to form a signaling channel associating a URI (Uniform Resource Identifier) address of the source VoIP terminal with the own public IP address to be registered in the SSW or form a media stream channel for generating a call between the source VoIP terminal and the target VoIP terminal.

12. (original) The apparatus of claim 11, wherein the IP address checking unit uses the NAT to check to check own private IP address internally being assigned in the cloud network and the public IP address accessible to itself from the outside of the cloud network.

13. (original) The apparatus of claim 12, further comprising:
an IP address storing unit configured to match and store the private IP address checked by the IP address checking unit and the public IP address and
wherein the IP address checking unit applies a change when the change for at least one of the private IP address and the public IP address is generated to provide the changed IP address to the IP address storing unit.

14. (original) The apparatus of claim 11, wherein the packet includes at least one of source address information, destination address information, source URI information, destination URI information and address information associated with the channel.

15. (original) The apparatus of claim 14, wherein the packet analyzes the packet to check whether it is a corresponding packet for a registration, applies the own public IP address and when it is a corresponding packet for a registration and updates the source address information of the packet and the address information associated with the channel to provide the updated source address information and address information to the SSW.

16. (original) The apparatus of claim 15, wherein the packet updating unit decides a corresponding packet as a packet for registering the IP address when the source URI information of the packet and the destination URI information are same.

17. (original) The apparatus of claim 14, wherein the packet updating unit analyzes the packet to check whether it is a packet for forming a signaling channel generating a call between the source VoIP terminal and the target VoIP terminal and applies the own public IP address when it is a packet for forming a signaling channel generating a call between the source VoIP terminal and the target VoIP terminal to update the address information associated with the channel.

18. (original) The apparatus of claim 17, wherein the packet updating unit stores the public IP address of the other SBC apparatus being stored in the address information associated with the channel of a corresponding response packet, when a response packet being corresponded to the packet is received from the target VoIP terminal.

19. (original) The apparatus of claim 18, wherein the packet updating unit stores the public IP address of the other SBC apparatus as the address information associated with the channel when the signaling channel is successfully formed.

20. (amended) A storage medium recording a program, the program executing a SBC(Session Boarder Controller) operating method, the SBC operating method being performed on a SBC apparatus, the SBC apparatus passing NAT(Network Address Translation) to be operated in a cloud network accessible to Internet, the SBC apparatus being connectable with the SSW(Soft Switch) through the Internet and performing a predetermined address translation for offering VoIP (Voice over Internet Protocol), the program comprising:
(a) checking an own public IP address being separated by an association with an own private IP (Internet Protocol) address and the NAT being used in the cloud network; and
(b) analyzing a packet for a VoIP communication when the packet is received from a source VoIP terminal, applying and updating the own public IP address to address information associated with a channel, the address information associated with the channel forming a channel with a target VoIP terminal being included in the packet, and forming a signaling channel associating a URI (Uniform Resource Identifier) address of the source VoIP terminal with the own public IP address to be registered in the SSW or forming a media stream channel for generating a call between the source VoIP terminal and the target VoIP terminal.
